(19) Europäisches Patentamt
European Patent Office
Office européen des brevets

(11) **EP 0 725 475 B1**

(12) **EUROPEAN PATENT SPECIFICATION**

(45) Date of publication and mention
of the grant of the patent:
**14.04.2004 Bulletin 2004/16**

(51) Int Cl.⁷: **H02M 3/28**

(21) Application number: **96300714.1**

(22) Date of filing: **01.02.1996**

(54) **DC converter with improved power factor**

Gleichstromwandler mit verbessertem Leistungsfaktor

Convertisseur de courant continu avec facteur de puissance amélioré

(84) Designated Contracting States:
**DE ES FR GB IT**

(30) Priority: **02.02.1995 JP 1578895**
**17.05.1995 JP 11861595**
**22.06.1995 JP 15643795**

(43) Date of publication of application:
**07.08.1996 Bulletin 1996/32**

(73) Proprietor: **Sanken Electric Co., Ltd.**
**Niiza-shi, Saitama-Pref. 352 (JP)**

(72) Inventor: **Usui, Hiroshi,**
**c/o Sanken Electric Co., Ltd.**
**Niiza-shi, Saitama-Pref., 352 (JP)**

(74) Representative: **Cardwell, Stuart Martin et al**
**Roystons**
**Tower Building**
**Water Street**
**Liverpool L3 1BA (GB)**

(56) References cited:
**EP-A- 0 498 651**          **GB-A- 2 115 627**
**US-A- 5 119 283**

**Description**

The present invention relates to a direct current converter, and more particularly to a direct current converter that improves the power factor for alternating current input.

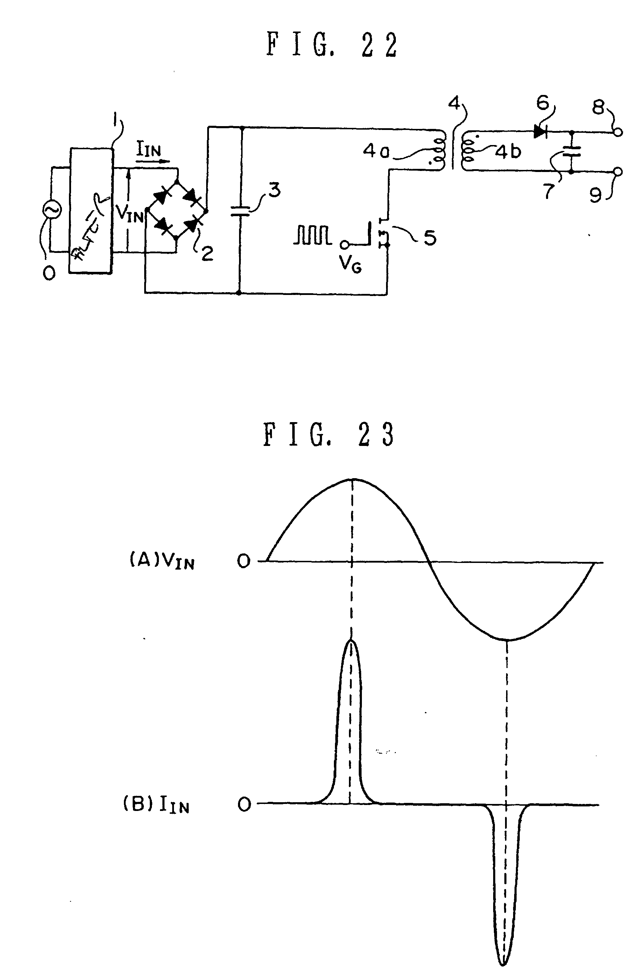

Direct current (hereinafter referred to as "DC") converters have been used at large in the electronic and electric fields to convert into DC power alternating current electric power (hereinafter referred to "alternating current" and "electric power" as "AC" and "power" respectively) supplied by a commercial AC power source. For example, as shown in Fig. 22, a prior art DC converter comprises a commercial AC power source O, a diode bridge rectifier 2 acting as a rectifying circuit connected with the commercial AC power source O via a filter circuit 1; a smoothing capacitor 3 connected with the output terminals of the diode bridge rectifier 2; a transformer 4 having primary and secondary windings 4a, 4b; and a series circuit connected with both ends of the smoothing capacitor 3 and including the primary winding 4a of the transformer 4 and a MOS-FET 5 acting as a switching element. Such a construction is reflected by JP-A-62-19102.

In operation of the DC converter shown in Fig. 22, an AC input current flow from the commercial AC power source O is rectified by the full-wave diode bridge rectifier 2 through the filter circuit 1, and then is smoothed by the smoothing capacitor 3 which produces approximate near DC voltage including a ripple ingredient between both ends of the smoothing capacitor 3 so that the DC voltage is applied to the series circuit of the primary winding 4a of the transformer 4 and the MOS-FET 5. At this moment, by switching the MOS-FET 5 on and off by control signals ($V_G$) imparted to the gate terminal of the MOS-FET 5, the voltage between both ends of the smoothing capacitor 3 is intermittently applied to the primary winding 4a of the transformer 4, and at the same time, voltage, induced in the secondary winding 4b of the transformer 4, is rectified and smoothed by a rectifier smoothing circuit of a rectifying diode 6 and an output capacitor 7, to produce DC output between output terminals 8, 9.

As the DC converter shown in Fig. 22, is a capacitor input type converter which comprises the commercial AC power source O; the filter circuit 1; the diode bridge rectifier 2; and the smoothing capacitor 3, the AC input current ($I_{IN}$) flow occurs only near the maximum value of AC input voltage ($V_{IN}$) shown in Fig. 23 (A), resulting in an AC input current waveform in a pulse shape as indicated in Fig. 23 (B). Therefore, the converter has a fault in that the power factor for AC input is lowered around 0.5 - 0.6. The term "power factor" means the ratio of the total active power in watts to the total apparent power in volt-amperes. In order to improve the power factor for AC input, for instance, it may be proposed to simply insert a choke coil of higher inductance into a rectifying circuit. However, such a choke coil is large in size and heavy in weight. Although recently an active converter system has been also proposed to electronically improve the power factor with a pre-converter, the number of components to be required is increased in this system, and as a result, the system has its faults in that it is manufactured in larger size and expensively, and in that electric mutual interference occurs between the mounted elements in operation.

JP6217537 discloses a power supply which comprises a rectifying circuit connected to an AC power source through a low-pass filter; and a first circuit that comprises a primary winding of a choke coil, a first diode, and a switch connected in series between two output terminals of the rectifying circuit; a second circuit that comprises a second diode and a primary winding of a transformer; a primary capacitor connected between a junction of the second diode and primary winding of the transformer and the rectifying circuit; a secondary winding of the transformer connected to output terminals through a rectifier smoothing circuit. The rectifier smoothing circuit comprises output diodes connected to opposite end of the secondary winding of the transformer; a secondary winding of the choke coil in electro-magnetic connection to the related primary winding; and an output smoothing capacitor.

In operation, the switch is alternatively turned ON and OFF in a high frequency switching mode, and during ON period of the switch, electric current flows through the primary winding of the choke coil, first diode and switch to accumulate electric energy in the choke coil, and simultaneously, terminal voltage of the primary capacitor is applied on the primary winding of the transformer that produces boosted or lowered voltage on the secondary winding of the transformer. Accordingly, the resulted voltage on the secondary winding produces excited current through the secondary winding of the choke coil and output smoothing capacitor to generate boosted or lowered output from output terminals. During OFF period of the switch, derived on the primary winding of the choke coil is a adverse voltage that is added on output from the rectifying circuit to generate a superimposed boosted voltage on the primary capacitor through the second diode, and therefore, elevated DC voltage can be taken out from the output terminals.

EP503715 demonstrates a power supply circuit that comprises first and second transformers. The first transformer has a primary winding connected to a main rectifier and a first controllable switch, and a second winding connected to a primary winding of the secondary transformer and a second controllable switch, while a secondary winding of the secondary transformer is connected to a load. Connected to output terminals of the main rectifier is a capacitor with the relatively small capacitance value to produce a voltage of rectified sine shape to the primary winding of the first transformer.

EP665632 represents a switching power source apparatus that comprises a full-wave rectifying circuit for rectifying an input from AC power source; a transformer having a primary winding with one end connected to a positive output terminal of the full-wave rectifying circuit and secondary winding; a smoothing capacitor connected in parallel to a series circuit of the primary winding and switch element; first and second diodes having anode terminals connected to a pair of input terminals of the full-wave rectifying circuit, and cathode terminals connected to the connection point of the primary winding and switch element; a choke coil connected between the full-wave rectifying circuit and a tertiary winding of the transformer; a rectifying and smoothing circuit for rectifying and smoothing the output of the secondary winding, and supplying a DC output voltage to a load; and a control circuit for controlling the on/off ratio of the switch element to stabilize the DC output voltage. The choke coil includes a first coil connected between a junction point of the primary and tertiary windings and the positive output terminal of the rectifying circuit; and a second coil connected between the tertiary winding and one of the input terminals of the rectifying circuit. When the switch element is turned off, electric current flows through the choke coil and smoothing capacitor without the transformer for better efficiency.

US 5119283 displays a voltage-doubler rectifier that includes an AC fullbridge diode rectifier and a DC-to-DC converter having two output boost circuits, one of which is coupled between the rectifier and a DC link, and the other of the output boost circuit is coupled, with opposite polarity, between the rectifier and the circuit common. Two series-connected filter capacitors are also coupled between the DC link and the circuit common. Each of two output boost circuits comprises either a series, parallel, or combination series/parallel resonant circuit and a rectifier. A switch is coupled between the junction joining one pair of diodes of the rectifier and the junction joining to the two filter capacitors. For a relatively high AC line voltage, the switch is open, and the circuit operates in a low boost mode. For a relatively low AC line voltage, the switch is closed, and the circuit operates in a high boost, or voltage-doubling, mode.

Accordingly, it is an object of the present invention to provide a DC converter which can improve the power factor for AC input.

Another object of the present invention is to provide a DC converter which can be manufactured in smaller size and light weight.

Accordingly, the present invention provides a DC converter including an AC power source; a rectifying circuit connected with the AC power source; a smoothing capacitor connected with the output terminals of the rectifying circuit; a transformer having primary and secondary windings ; and a primary series circuit which contains the primary winding of the transformer and a switching element, and is connected with both ends of the smoothing capacitor to generate DC output from the secondary winding of the transformer through a rectifier smoothing circuit by ON and OFF operation of the switching element, and a choke coil having a primary winding and a secondary winding;

the primary winding of the choke coil being connected with the primary series circuit including the primary winding of the transformer and the switching element; and characterised

in that the secondary winding of the choke coil being connected between an output of the rectifying circuit and the smoothing capacitor.

Further embodiments of the invention are set, out, in the dependent claims.

By on and off operation of the switching elements, a current flows intermittently through the primary winding of the choke coil, and at the same time, voltage is induced in the secondary winding of the choke coil. At this moment, the smoothing capacitor is charged by the induced voltage in the secondary winding of the choke coil and superimposed on the rectified output voltage of the rectifying circuit. When the rectified output voltage of the rectifying circuit is low, a current flows into the smoothing capacitor by the induced voltage in the secondary winding of the choke coil to charge the smoothing capacitor during a wider period of time in a cycle of AC frequency so that the waveform of the AC input current becomes nearly a sinusoidal wave shape to improve the power factor for AC input. Therefore, by merely adding a choke coil having primary and secondary windings, the power factor for AC input can be improved. Further, as a choke coil is used in the switching frequency which is much higher than the frequency of an AC power source, a choke coil of a low inductance may be used to manufacture a DC converter in small size and light weight.

These as well as other objects of the present invention will become apparent during the course of the following description with reference to the accompanying drawings, in which:

Fig. 1 is an electric circuit diagram of a DC converter showing a first embodiment of the present invention.

Fig. 2 is a waveform diagram of AC input voltage ($V_{IN}$) an AC input current ($I_{IN}$) in the circuit of Fig. 1.

Fig. 3 is an electric circuit diagram of a second embodiment modified as a first variation of the DC converter in Fig. 1.

Fig 4. is an electric circuit diagram of a third embodiment modified as a second variation of the DC converter in Fig. 1.

Fig. 5 is an electric circuit diagram of a fourth embodiment modified as a first variation of the DC converter in Fig. 3.

Fig. 6 is an electric circuit diagram of a fifth embodiment of the DC converter according to the present invention.

Fig. 7 is an electric diagram of a sixth embodiment of the DC converter according to the present invention.

Fig. 8 is an electric circuit diagram of a DC converter out with the present invention.

Fig. 9 is an electric circuit diagram of a seventh embodiment of the DC converter according to the present invention.

Fig. 10 is an electric circuit diagram of an eighth embodiment of the DC converter modified from the eighth embodiment in Fig. 9.

Fig. 11 is an electric diagram of a ninth embodiment of the DC converter modified from the eighth embodiment in Fig. 9.

Fig. 12 is an electric circuit diagram of a tenth embodiment showing the DC converter of half-bridge type according to the present invention.

Fig. 13 is an electric circuit diagram of an eleventh embodiment showing the DC converter of center tap type according to the present invention.

Fig. 14 is an electric circuit diagram of a twelfth embodiment showing the DC converter of resonance type according to the instant invention.

Fig. 15 is an electric circuit diagram of a thirteenth embodiment showing the DC converter of a resonance type with its circuit modified similarly to the circuit in Fig. 3.

Fig. 16 is a waveform diagram of AC input voltage ($V_{IN}$) and AC input diagram ($I_{IN}$) in the circuit in Fig. 15.

Fig. 17 is an electric circuit diagram of a fourteenth embodiment showing the DC converter of resonance type converter with its circuit modified similarly to the circuit in Fig. 9.

Fig. 18 is an electric circuit diagram of a fifteenth embodiment showing the DC converter with a diode bridge recitfier of fast-recovery diodes.

Fig. 19 is an electric circuit diagram of a sixteenth embodiment of the DC converter modified as a second variation of the circuit in Fig. 3.

Fig. 20 is an electric circuit diagram of a seventeenth embodiment of the DC converter modified as a third variation of the circuit in Fig. 3.

Fig. 21 is an electric circuit diagram of a eighteenth embodiment of the DC converter modified as a fourth variation of the circuit in Fig. 3.

Fig. 22 is an electric diagram of a prior art DC converter.

Fig. 23 is a waveform diagram of AC input voltage ($V_{IN}$) and AC input current ($I_{IN}$) in the circuit in Fig. 22.

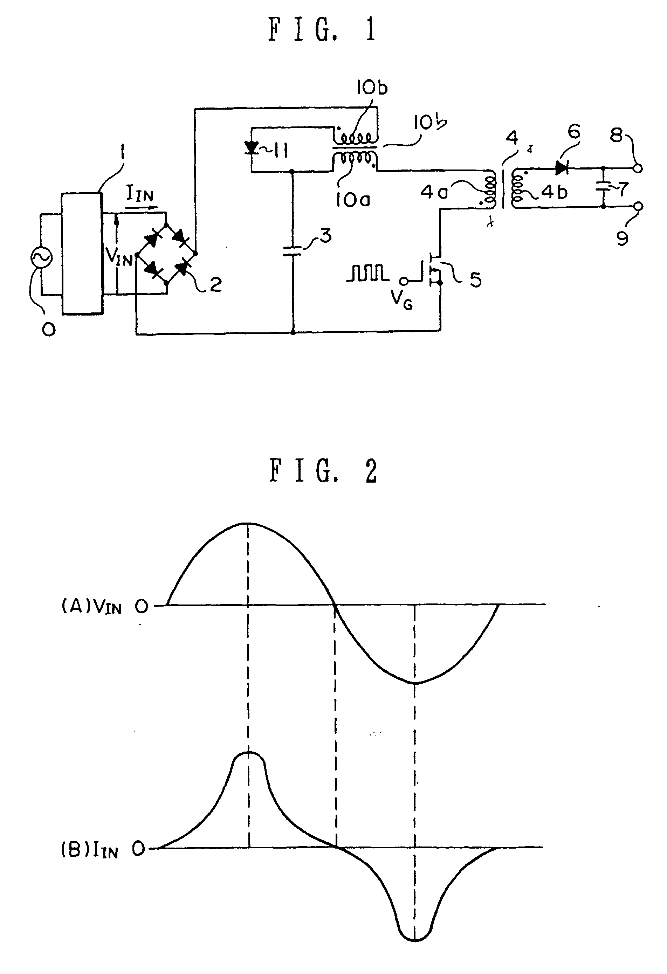

Referring now to the accompanying drawings, nineteenth embodiments of the DC converters according to the present invention will be described hereinafter in reference to Figs. 1 to 21 wherein same symbols are used to indicate substantially similar components as those shown in Figs. 22 and 23, and their detailed explanation thereon is omitted.

In a first embodiment of the DC converter shown in Fig. 1 according to the present invention, it comprises a choke coil 10 having primary and secondary windings 10a, 10b and a rectifying diode 11 connected in series with the secondary winding 10b of the choke coil 10. The primary winding 10a of the choke coil 10 is connected in series between a smoothing capacitor 3 and a primary winding 4a of a transformer 4, and the secondary winding 10b of the choke coil 10 is connected between one of the output terminals of a diode bridge rectifier 2 and an anode electrode of the rectifying diode 11 on a positive output line of the diode bridge rectifier 2.

In operation of the DC converter shown in Fig. 1, an AC input current flow from commercial AC power source O is rectified by the full-wave diode bridge rectifier 2 through a filter circuit 1, and then is applied to the smoothing capacitor 3 through the secondary winding 10b of the choke coil 10 and the diode 11 to charge the smoothing capacitor 3. When a MOS-FET 5 is turned to "on" or "off" by application of control signals ($V_G$) to the gate terminals of the MOS-FET 5 from a control circuit not shown but well-known, the voltage between both ends of the smoothing capacitor 3 is intermittently applied on the primary winding 10a of the choke coil 10 and the primary winding 4a of the transformer 4. When the MOS-FET 5 is switched to "off" from "on", voltage is induced on a secondary winding 4b of the transformer 4 so that current flow produced by the induced voltage in the secondary winding 4b is rectified and smoothed by a rectifier smoothing circuit which includes a rectifying diode 6 and an output capacitor 7 to produce DC output between output terminals 8, 9. When current flow is intermittently generated through the primary winding 10a of the choke coil 10, energy is accumulated in the choke coil 10 so that voltage is induced in the secondary winding 10b, thereby causing current to flow from the secondary winding 10b of the choke coil 10 through the diode 11 to charge the smoothing capacitor 3. Therefore, a superimposed voltage is applied to the smoothing capacitor 3 which is generated by adding the voltage induced in the secondary winding 10b of the choke coil 10 on the output voltage of the full-wave diode bridge rectifier 2.

Here, for instance, the frequency of the control signals for MOS-FET 5 is in a range of 100 to 200kHz, and the frequency of commercial AC power source is in a range of 50 to 60kHz. Thus, as the frequency of the control signals for the MOS-FET 5 is much higher than the frequency of the commercial AC power source 0, the induced voltage in the winding 10b of the choke coil 10 is greater than the differential voltage obtained when the output voltage of the full-wave diode bridge rectifier 2 is subtracted from the voltage applied between both ends of the smoothing capacitor 3. For this reason, even if the output voltage of the full-wave diode bridge rectifier 2 is lower than the voltage between both ends of the smoothing capacitor 3, a charging current flow is generated through the smoothing capacitor 3 by the induced voltage in the secondary winding 10b of the choke coil 10. Thereby, the smoothing capacitor 3 can be charged throughout a whole range in a cycle of the power frequency when AC input current ($I_{IN}$) shown in Fig. 2(B) flows into the rectifier 2 under the AC input voltage ($V_{IN}$) shown in Fig. 2 (A).

The AC input current ($I_{IN}$) which flows through the diode bridge rectifier 2 has its waveform shown in Fig. 2 (B) closer to the sinusoidal waveform of the AC input voltage (VIN) seen in Fig. 2(A) thereby resulting in the increase of active power and improvement of the power factor for AC input. Also, as the choke coil 10 is energized in high frequency of order within the range of 100 - 200kHz (kilohertz), the converter can be electrically driven with a choke coil of low inductance which may be manufactured in a small size, light weight and low cost. Therefore, the DC converter can be manufactured in its small-size and light weight with its simpler circuit.

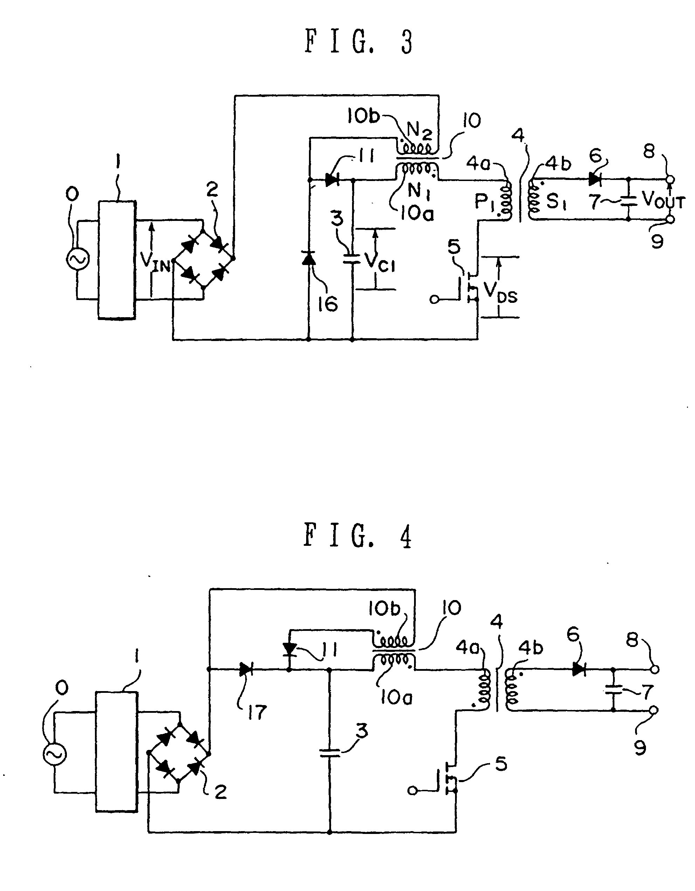

The DC converter shown in Fig. 1 may be modified in various ways. For example, in the DC converter shown in Fig. 3, a cathode electrode of an additional diode 16 is connected between the secondary winding 10b of the choke coil 10 and the diode 11, and an anode electrode of the diode 16 is connected between the negative terminals of the diode bridge rectifier 2 and the smoothing capacitor 3. When the MOS-FET 5 is turned on, current flow is produced through the diode 11 by the induced voltage in the secondary winding 10b of the choke coil 10 superimposed on the voltage of the AC power source. Thus, as the smoothing capacitor 3 is charged by current flow produced by the superimposed high voltage, backward voltage is applied to the diode 11 due to the voltage of the smoothing capacitor 3 when the MOS-FET 5 ceases conducting, and therefore, the diode 11 requires its high breakdown voltage in the DC converter shown in Fig. 1. On the contrary, the circuit in Fig. 3 is advantageous in that the backward surge voltage can be bypassed through the diode 16 when it is applied to the diode 11 during the ON period of the MOS-FET 5, and therefore, the diode 11 may have its lower breakdown voltage. When the positive and negative output terminals of the diode bridge rectifier 2 are simultaneously 0 volt like in the shorted condition, the backward surge voltage is produced and bypassed in a closed circuit of the primary winding 10b of the choke coil 10, the shorted rectifier 2 and diode 16. Otherwise, to avoid backward surge voltage on the diode 11, an avalanche diode 16a may be connected in parallel with the capacitor 3.

As shown in Fig. 4, the DC converter comprises a diode 17 whose cathode electrode is connected between the diode 11 and the smoothing capacitor 3, and the anode electrode of the diode 17 is connected with the positive terminal of the diode bridge rectifier 2 and the secondary winding 10b of the choke coil 10.

At the initial stage when the power voltage from the commercial AC power source O is applied to the diode bridge rectifier 2 in the circuit of Fig. 1, a rush current flows through the smoothing capacitor 3 via the secondary winding 10b of the choke coil 10 so that much higher voltage is induced in the primary winding 10a of the choke coil 10. The induced voltage in the primary winding 10a of the choke coil 10 results in generation of the rush current which flows through the smoothing capacitor 3 into a diode incorporated in the MOS-FET 5, thereby causing damage of the MOS-FET 5. On the contrary, the circuit of Fig. 4 is advantageous in that the diode 17 can prevent damage of the MOS-FET 5 upon occurrence of the rush current although the output voltage of the full-wave diode bridge rectifier 2 produces a current flow because it flows through via the diode 17 into the smoothing capacitor 3.

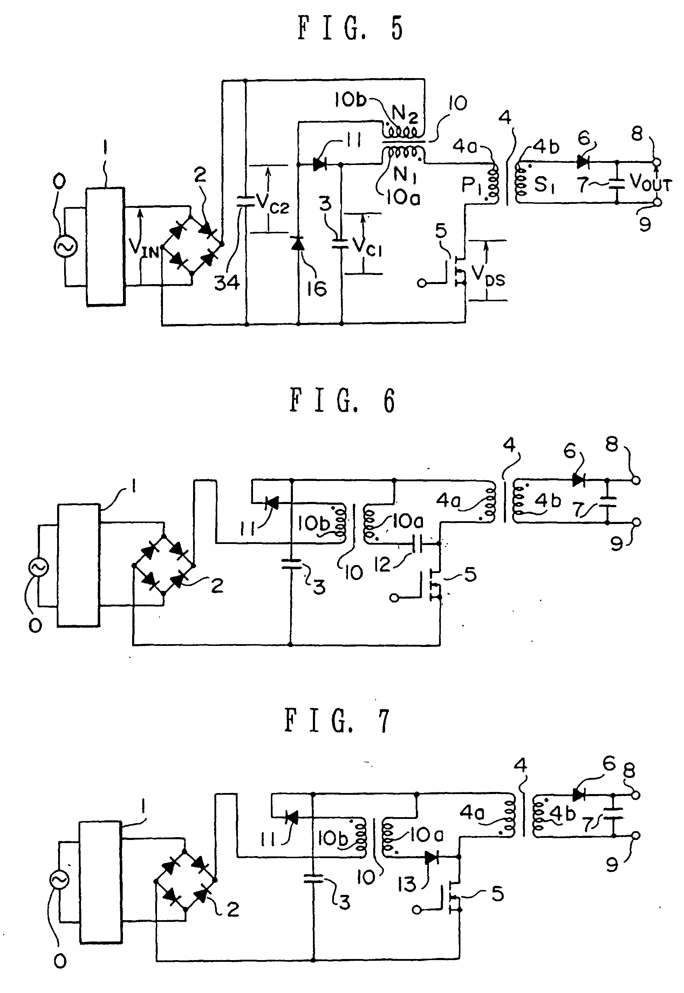

Fig. 5 shows the DC converter wherein a capacitor 34 is connected between a joint portion of the positive output terminal of the diode bridge rectifier 2 and the secondary winding 10b of the choke coil 10 and between a joint portion of the negative output terminal of the diode bridge rectifier 2 and the diode 16 in the circuit of Fig. 3. Here, the maximum value of voltage ($V_{DS}$) between the drain and source terminals of the MOS-FET 5 in Fig. 3 is expressed by the formula 1:

$$V_{DS} = V_{C1} + \frac{P_1}{S_1} \cdot V_{OUT} + \frac{N_1}{N_2} \cdot \sqrt{2}\, V_{IN} \qquad (1)$$

wherein $V_{DS}$ is voltage between both ends of the smoothing capacitor 3; $P_1$ and $S_1$ are respectively the numbers of turns of the primary and the secondary windings 4a, 4b of the transformer 4; $N_1$ and $N_2$ are respectively the numbers of turns of the primary and secondary windings 10a, 10b of the choke coil 10; and $V_{OUT}$ is DC output voltage between the output terminals 8, 9.

Contrary to the above, the minimum value of voltage ($V_{C2}$) between both ends of the capacitor 34 in the circuit in Fig, 5 is expressed by the formula 2:

$$V_{C2} = \frac{N_2}{N_1} \left[ \frac{L_{N1}}{L_{N1} + L_{P1}} \cdot V_{C1} \right] \qquad (2)$$

wherein $L_{N1}$ is inductance of the winding 10a of the choke coil 10; and $L_{P1}$ is inductance of the primary winding 4a of the transformer 4.

Thereby, the maximum value of voltage ($V_{DS}$) between the drain source terminals of the MOS-FET 5 in the circuit in Fig. 5 is expressed by the formula 3:

$$V_{DS} = V_{C1} + \frac{P_1}{S_1} \cdot V_{OUT} + \frac{N_1}{N_2} \left( \sqrt{2}\, V_{IN} - V_{C2} \right) \qquad (3)$$

Therefore, since the maximum value of voltage ($V_{DS}$) between the drain and source terminals of the MOS-FET 5 is reduced by an amount shown by ($N_1/N_2$) x $V_{C2}$ in the formula 3, it is advantageous that the MOS-FET 5 of Fig. 5 may have its lower breakdown voltage than that of the MOS-FET 5 of Fig. 3.

Fig. 6 shows a fifth embodiment of the DC converters according to the present invention wherein, unlike the first embodiment in Fig. 1, the primary winding 4a of the transformer 4 is connected in parallel with a series circuit of the primary winding 10a of the choke coil 10 and a capacitor 12.

In operation of the circuit in Fig. 6, when the MOS-FET 5 is turned on, a current flows through the primary winding 4a of the transformer 4, and simultaneously, a branched current flows through the primary winding 10a of the choke coil 10 to charge the capacitor 12. Then, when the MOS-FET 5 is turned off, a current flows from the discharged capacitor 12 through the primary winding 10a of the choke coil 10 so that current flows through the secondary winding 10b and the diode 11 to charge the smoothing capacitor 3 due to voltage induced in the secondary winding 10b. In this way, the discharge of the capacitor 12 restrains the sudden increase of the charging current from the diode bridge rectifier 2 via the secondary winding 10b of the choke coil 10 and the diode 11 to the smoothing capacitor 3 to slow down increase of the charging current into the smoothing capacitor 3. Accordingly, the circuit of Fig. 6 effectively improve the power factor for AC input since the smoothing capacitor 3 is charged during a wider period of time in a cycle of the commercial frequency similarly to the circuit in Fig. 1. Moreover, the charging current to the smoothing capacitor 3 is a factor to determine the voltage of the capacitor 12 in Fig. 6 to automatically adjust the voltage applied on the winding 10a of the choke coil 10 during fluctuation of input voltage. Thus, the circuit of Fig. 6 is advantageous which may automatically adjust the induced voltage of the winding 10b of the choke coil 10 in response to fluctuation in the input voltage.

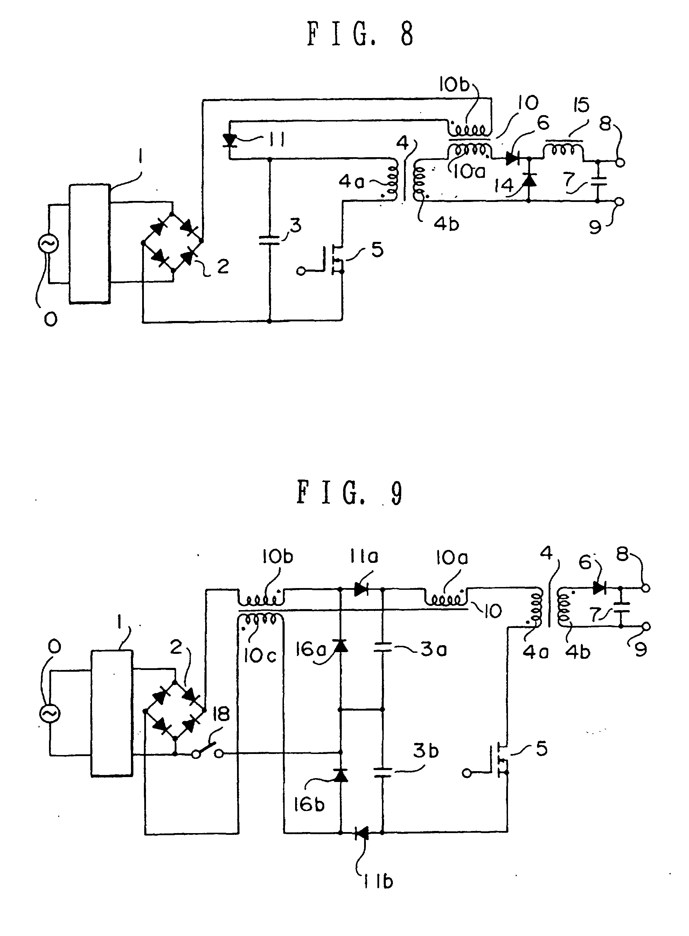

Fig. 7 indicates a sixth embodiment of the DC converter according to the present invention wherein the capacitor 12 in the circuit of Fig. 6 is replaced with a diode 13. In operation of the circuit in Fig. 7, when the MOS-FET 5 is turned on, a current flows through the primary winding 4a of the transformer 4 while a branched current flows the primary winding 10a of the choke coil 10 and the diode 13. When the MOS-FET 5 is turned off, the current ceases flowing through the primary winding 10a of the choke coil 10 to thereby induce voltage in the secondary winding 10b of the choke coil 10 so that current flows through the secondary winding 10b of the choke coil 10 and the diode 11 to charge the smoothing capacitor 3. Hence, even when the output voltage of the full-wave diode rectifier 2 is lower than the voltage applied between both ends of the smoothing capacitor 3, the charging current flows into the smoothing capacitor 3 by the voltage induced in the secondary winding 10b of the choke coil 10. Therefore, the circuit in Fig. 7 effectively realizes improvement of the power factor for AC input because of charge of the smoothing capacitor 3 during a wider period of time in a cycle of the commercial frequency in the same way as the circuit of Fig. 1.

Fig. 8 demonstrates an embodiment of the DC converter out with the claimed invention wherein the primary winding 4a of the transformer 4 has its reverse winding direction to that of the primary winding 4a of the DC converter in Fig. 1. Also, a diode 14 and a smoothing reactor 15 are additionally connected with the rectifier smoothing circuit consisting of the rectifying diode 6 and the output capacitor 7 to modify the converter into the forward from the flyback type, and furthermore, the primary winding 10a of the choke coil 10 is otherwise connected between the secondary winding 4b of the transformer 4 and the rectifying diode 6. In operation of the circuit of Fig. 8, voltage is induced in the secondary winding 4b by a current flowing through the primary winding 4a of the transformer 4 when the MOS-FET 5 is turned on, and simultaneously the induced voltage in the secondary winding 4b generates a current flow through the primary winding 10a of the choke coil 10a of the choke coil 10 which is then rectified by the rectifying diode 6 an smoothed by the smoothing reactor 15 and the capacitor 7 to produce resultant DC output between the output terminals 8,9. Also, the diode 14 serves to discharge the energy accumulated in the smoothing reactor 15. When the MOS-FET 5 is turned off, the current ceases flowing through the primary winding 4a of the transformer 4 to stop the current flowing through the primary winding 10a of the choke coil 10 so that a current flows through the secondary winding 10b of the choke coil 10 and the diode 11 to charge the smoothing capacitor 3 by voltage induced in the secondary winding 10b of the choke coil 10. Accordingly, the voltage induced in the secondary winding 10b of the choke coil 10 allows the current to flow into and charge the smoothing capacitor 3 during a wider period of time in a cycle of the commercial frequency, even when the output voltage of the full-wave diode bridge rectifier 2 is lower than the voltage between both ends of the smoothing capacitor 3. Thus, the forward type converter shown in Fig. 8 can improve the power factor for AC input in the same way as the flyback type converter shown in Fig. 1.

Fig. 9 exhibits an eighth embodiment of the DC converter according to the present invention wherein, unlike Fig. 1, the smoothing capacitor 3 is divided into first and second capacitors 3a, 3b, and a change switch 18 is connected as a change means between a joint portion of the first and second smoothing capacitors 3a, 3b, and the input terminal of the diode bridge rectifier 2. The secondary winding 10b of the choke coil 10 is connected between the positive output terminal of the diode bridge rectifier 2 and the first smoothing capacitor 3a. A tertiary winding 10c is magnetically coupled with the primary and secondary windings 10a, 10b of the choke coil 10, and is connected between the negative output terminal of the diode bridge rectifier 2 and the second smoothing capacitor 3b through a diode 11b. A first diode 11a serves as a first rectifying clement connected in series with the secondary winding 10b of the choke coil 10, and the second diode 11b serves as a second rectifying element connected in series with the tertiary winding 10c of the choke coil 10. A third diode 16a provides a third rectifying element connected between a joint portion of the first and second smoothing capacitors 3a, 3b, and a joint portion of the secondary winding 10b of the choke coil 10 and the first diode 11a. A fourth diode 16b is a fourth rectifying element connected between a joint portion of the first and second smoothing capacitors 3a, 3b and a joint portion of the tertiary winding 10c of the choke coil 10 and the second diode 11b. When the change switch 18 is closed in the circuit of Fig. 9 for instance under the 100V voltage system of the commercial AC power source 0, double voltage 200V is applied on the primary winding 4a of the transformer 4 by the diode bridge rectifier.2 and first smoothing capacitor 3a so that the diode bridge rectifier 2 and the first and second smoothing capacitors 3a, 3b operate as a voltage doubler rectifying circuit. Then, when the change switch 18 is opened under the 200V voltage system of the commercial AC power source 0, single voltage 200V is applied on the primary winding 4a of the transformer so that a bridge rectifying circuit of ordinary capacitor input type is operated by the diode bridge rectifier 2 and the first and second smoothing capacitors 3a, 3b. While the MOS-FET 5 is turned off, a charging current flows into the first and second capacitors 3a, 3b by the voltage induced in the second and tertiary windings 10b, 10c of the choke coil 10 during a wider period of time in a cycle of the commercial frequency to improve the power factor for AC input in Fig. 9 similarly to the circuit in Fig. 1. Also, the DC converter shown in Fig. 9 is advantageous that it is applicable to either system of 100V or 200V by switching the change switch 18. In Fig. 9, other similar operations are performed as those in the circuit of Fig. 1.

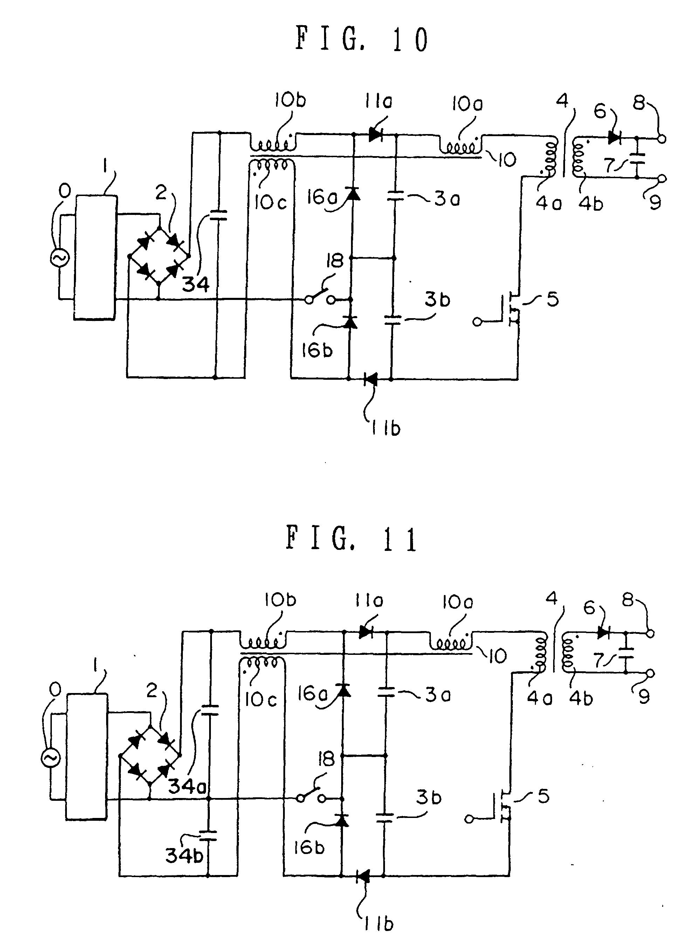

In the ninth embodiment shown in Fig. 10, the capacitor 34 is connected between a joint portion of the diode bridge rectifier 2 and the secondary winding 10b of the choke coil 10 and a joint portion of the diode bridge rectifier 2 and the tertiary winding 10c of the choke coil 10 so that the MOS-FET 5 may have its low breakdown voltage.

In the tenth embodiment of the instant invention shown in Fig. 11, a first capacitor 34a is connected between a joint portion of the diode bridge rectifier 2 and the secondary winding 10b of the choke coil 10 and the change switch 18. A second capacitor 34b is connected between the change switch 18 and a joint portion of the diode bridge rectifier 2 and the tertiary winding 10c of the choke coil 10 to obtain a similar effect.

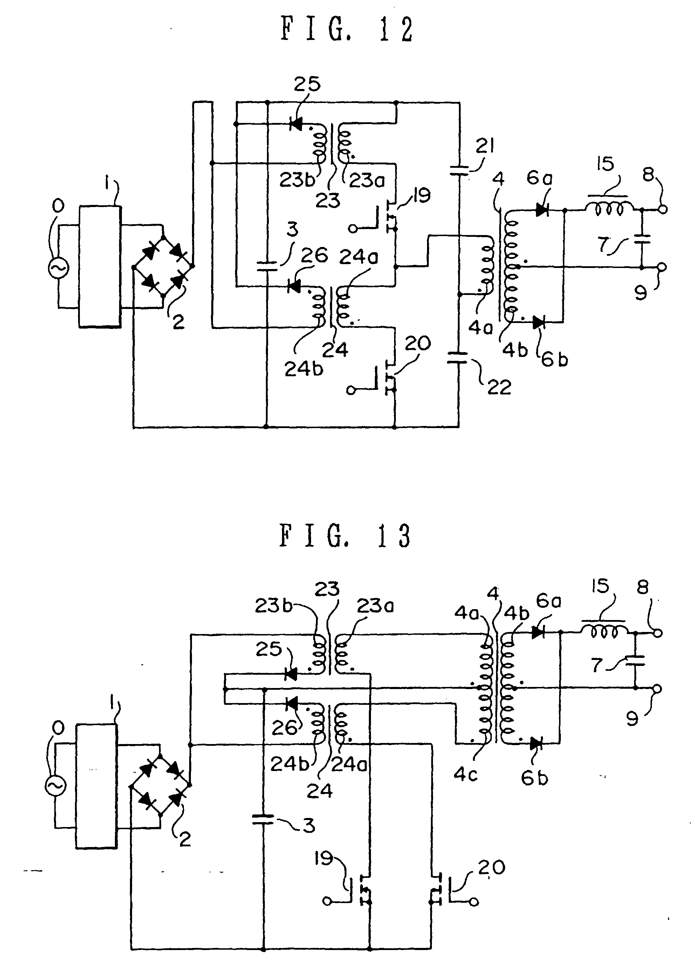

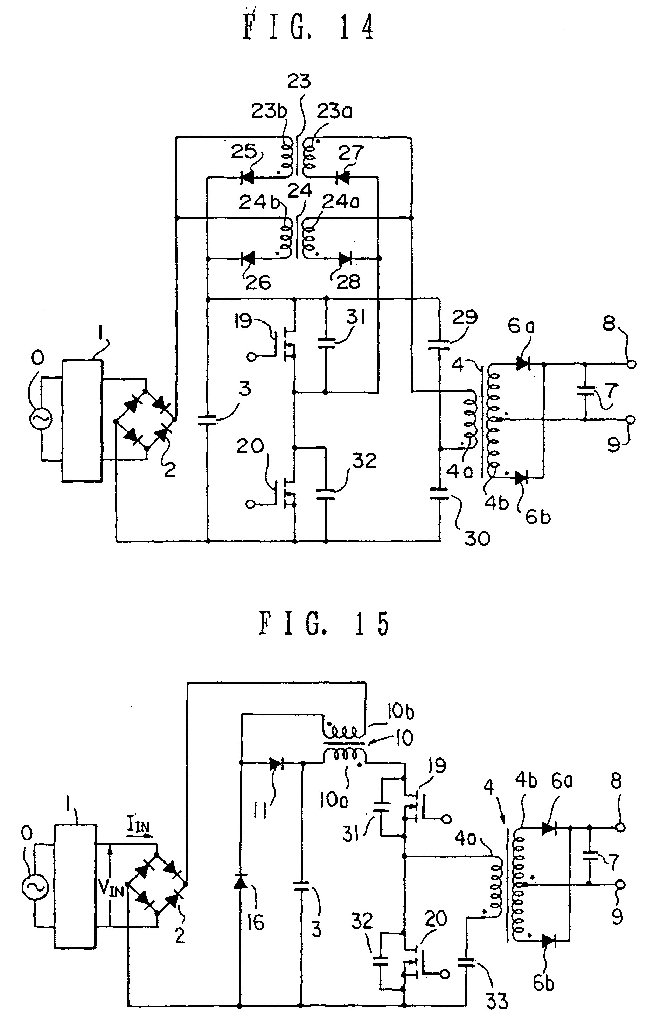

Also, it would be obvious that the present invention is applicable to DC converters of other types including for example the half-bridge type, the center tap types, the resonance type. Figs. 12 to 14 show eleventh to thirteenth embodiments of the present invention respectively applied to the half-bridge type, the center tap type and the resonance type converters wherein rectifying diodes 6a and 6b are connected respectively between one end of the secondary winding 4b and the smoothing reactor 15 and between the other end of the secondary winding 4b and the smoothing reactor 15. In Fig. 12, a first MOS-FET (first switching element) 19 is connected between a first winding 23a of a first choke coil 23 and the primary winding 4a of the transformer 4. A second MOS-FET (second switching clement) 20 is connected between a first winding 24a of a second choke coil 24 and the negative output terminal of the diode bridge rectifier 2. In series connected between the positive and negative output terminals of the diode bridge rectifier 2 are a second winding 24b of the second choke coil 24, a diode 26, first and second half-bridge capacitors 21, 22. Also, connected between the positive output terminal of the diode bridge rectifier 2 and the first half-bridge capacitor 21 are a second winding 23b of the first choke coil 23 and a diode 25 in series. The primary winding 4a of the transformer 4 has one end connected between the first MOS-FET 19 and the first winding 24a of the second choke coil 24 and the other end connected between the first and second half-bridge capacitors 21, 22. In Fig. 13, the MOS-FET 19 is connected between the first choke coil 23 and the negative input terminal of the diode bridge rectifier 2, and the MOS-FET 20 is connected between the second choke coil 24 and the negative input terminal of the diode bridge rectifier 2. A second primary winding 4c is connected in series with the first primary winding 4a and the joint portion of the first and second primary windings 4a and 4c is connected with the diodes 25 and 26 and capacitor 3. In Fig. 14, diodes 27 and 28 are connected in series respectively with the first winding 23a of the first choke coil 23 and with the first winding 24a of the second choke coil 24. One end of the primary winding 4a of the transformer 4 is connected to the first windings 23a and 24a of the first and second choke coils 23, 24 and the other end of the primary winding 24a is connected between first and second current resonance capacitors 29 and 30. First and second voltage resonance capacitors 31 and 32 are connected in parallel respectively with MOS-FETs 19 and 20.

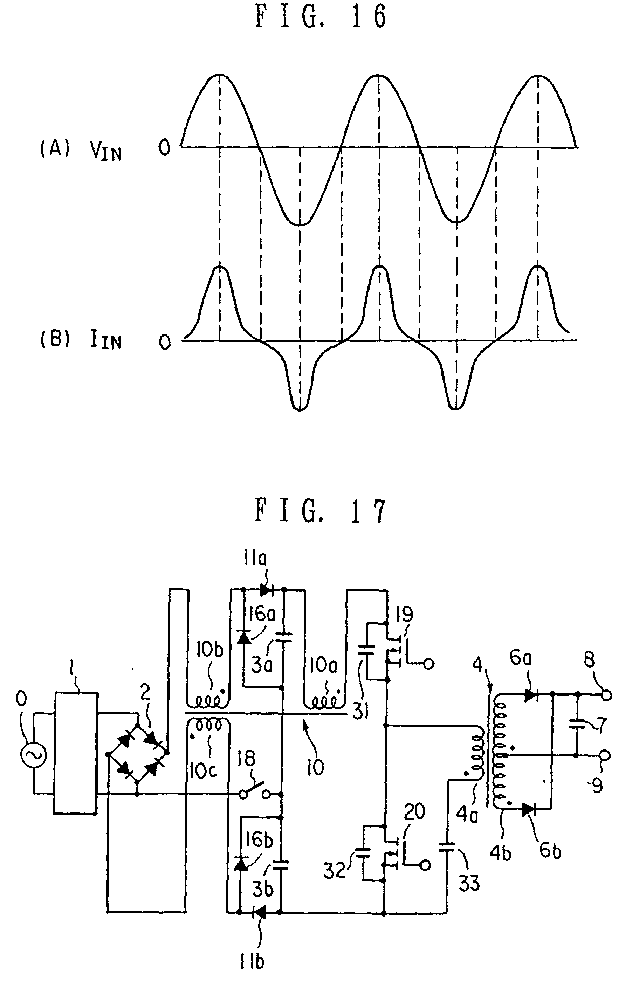

Fig. 15 shows a fourteenth embodiment of the present invention which includes a similar electric construction as the second embodiment shown in Fig. 3. However, unlike the circuitry in Fig. 3, in the resonance type converter of Fig. 15, the first and second MOS-FETs 19, 20 are connected in series with both ends of the smoothing capacitor 3 through the primary windings 10a, 10b of the choke coil 10. A series circuit of the primary winding 4a of the transformer 4 and a current resonance capacitor 33 has one end connected between the first and second MOS-FETs 19, 20 and the other end of the series circuit is connected between the MOS-FET 20 and the negative terminal of the diode bridge rectifier 2. First and second voltage resonance capacitors 31, 32 are respectively connected in parallel with the first and second MOS-FETs 19, 20. A rectifier smoothing circuit connected with the secondary side comprises the rectifying diodes 6a, 6b and the output capacitors 7, connected to the secondary winding 4b of the transformer 4. In operation of the circuit in Fig. 15, when the first and second MOS-FETs 19, 20 are alternatively turned on and off, a resonance current in a sinusoidal wave shape flows through the primary winding 4a of the transformer 4 by the resonance action of leakage inductance in the transformer 4 with the current resonance capacitor 33. When the first or second MOS-FET 19, 20 is turned off, resonance voltage in a sinusoidal wave shape is generated between both ends of the first and second MOS-FETs 19, 20 due to voltage resonance of the primary winding 4a of the transformer 4 and the first and second voltage resonance capacitors 31, 32. Induced in the secondary winding 4b by the current flowing through the primary winding 4a of the transformer 4 is the voltage which is then rectified and smoothed by the rectifier smoothing circuit consisting of the rectifying diodes 6a, 6b and the output capacitor 7 to produce DC output is between the output terminals 8, 9. At the same time, a current intermittently flows through the primary winding 10a of the choke coil 10 to induce in the secondary winding 10b AC voltage which is then smoothed by the diode 11 and applied to the smoothing capacitor 3 to charge the smoothing capacitor 3 with the voltage superimposed on the output voltage of the full-wave diode bridge rectifier 2. Consequently, a current flows to charge the smoothing capacitor 3 during a wider period of time in a cycle of the commercial frequency in the circuit of Fig. 15. As shown in Fig. 16(B), the waveform of AC input current ($I_{IN}$) is near sinusoidal wave shape of AC input voltage ($V_{IN}$) shown in Fig. 16(A) thereby causing improvement of the power for AC input in the same way as the circuit in Fig. 1. When the first MOS-FET 19 is turned on in Fig. 15, the diode 16 serves to bypass voltage applied on the capacitance 17 which may cause reverse surge voltage applied on the diode 11 so that the diode 11 may advantageously have its low breakdown voltage. When the positive and negative output terminals of the diode bridge rectifier 2 are simultaneously 0 volt like in the shorted condition, the reverse surge voltage is produced and bypassed in a closed circuit of the primary winding 10b of the choke coil 10, the shorted rectifier 2 and diode 16.

Fig. 17 shows a fifteenth embodiment of the invention which includes a similar electric construction in Fig. 15 as the embodiment shown in Fig. 9. When the change switch 18 is closed under the 100V voltage system of the commercial AC power source O, a voltage doubler rectifying circuit is formed by the diode bridge rectifier 2 and the first and smoothing capacitors 3a, 3b. When the change switch 18 is opened under the 200V voltage system of the commercial AC power source 0, an ordinary capacitor input type bridge rectifying circuit is formed by the diode bridge rectifier 2 and the first and second smoothing capacitors 3a, 3b. Other similar operations to Fig. 15 are performed in Fig. 17, A current flows to charge the first and second smoothing capacitors 3a, 3b by the voltage induced in the second and the tertiary windings 10b, 10c of the choke coil 10 during a wider period of time in a cycle of the commercial frequency to improve the power factor for AC input in the same way as the embodiment shown in Fig. 9 advantageously utilizing either of 100V and 200V voltage system by switching the change switch 18 in response to the voltage of the commercial power source 0.

Each converter shown in Figs. 6 to 17 may improve the power factor for AC input by simply adding the choke coil 10, 23 or 24 of low inductance, small-size, light weight and low cost to provide small-sized, light weight, and low cost DC converters.

Modes of the present invention may be varied in view of actual demands without limitation to the above-mentioned embodiments. For instance, diodes 11, 11a, 11b, 25, and 26 can be omitted when high speed diodes are used in the diode bridge rectifier 2 in each embodiment shown in Fig. 1, Figs. 6 to 9, Figs. 12 to 15, and Fig. 17. In addition, the diodes 16, 16a, and 16b can be also omitted in each embodiment shown in Figs. 9, 15 and 17.

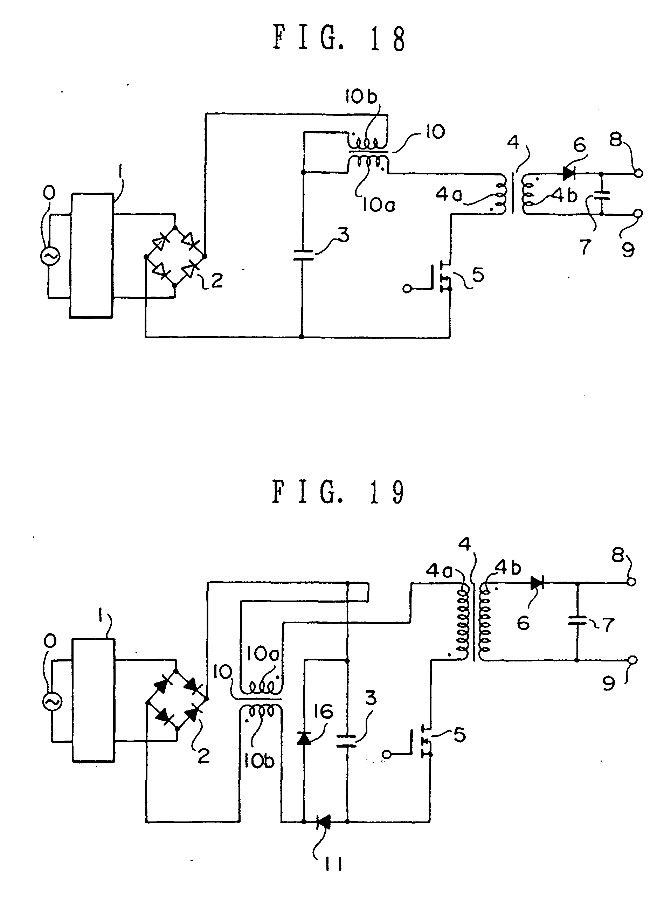

Fig. 18 shows a similar DC converter to that shown in Fig. 1 but without the rectifying diode 11 utilizing fast-recovery diodes called as "high speed diodes" in the diode bridge rectifier 2. Also, the diode 16 or 17 may be added to each embodiment shown in Figs. 6 to 8 and Figs. 12 to 14 to produce a similar effect to the embodiments shown in Figs. 3 and 4. In Fig. 1, Figs. 3 to 5, Figs. 9 to 11, and Fig. 18, the primary winding 10a of the choke coil 10 is connected in series between the smoothing capacitor 3 and the primary winding 4a of the transformer 4. The primary winding 10a of the choke coil 10 may be connected in series between the MOS-FET 5 and the smoothing capacitor 3 or between the primary winding 4a of the transformer 4 and the MOS-FET 5. In each embodiment shown in Figs. 15 and 17, the primary winding 10a of the choke coil 10 is connected in series between the smoothing capacitor 3 and the first MOS-FET 19. Instead, the primary winding 10a of the choke coil 10 may be connected in series between the first MOS-FET 19 and the second MOS-FET 20 or between the second MOS-FET 20 and the smoothing capacitor 3. In addition, in each embodiment shown in Fig. 1, Figs. 3 to 8, Figs. 15, and 18, the secondary winding 10b of the choke coil 10 may be connected between the negative output terminal of the diode bridge rectifier 2; and the smoothing capacitor 3. Similarly, in each embodiment in Figs. 12 to 14, each secondary winding 23b, 24b of the first and second choke coils 23, 24 may be connected between the negative output terminal of the diode bridge rectifier 2, and the smoothing capacitor 3.

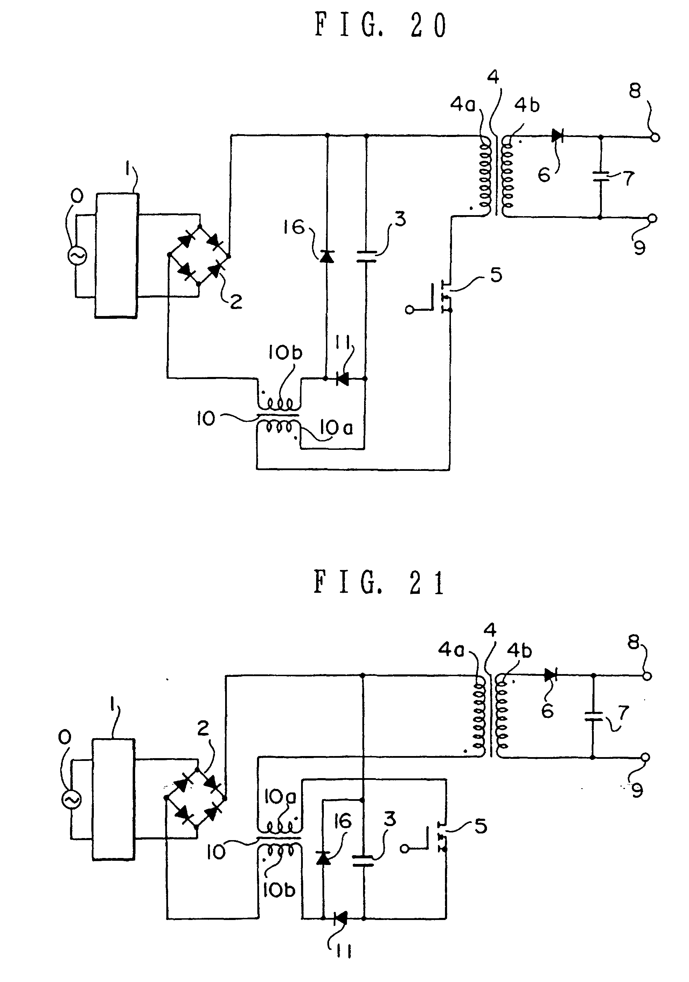

Fig. 19 shows an example of the secondary winding 10b of the choke coil 10 and the diode 11 connected with the negative output line of the diode bridge rectifier 2 in the embodiment shown in Fig. 3. Fig. 20 shows an example of the primary winding 10a of the choke coil 10 connected in series between the MOS-FET 5 and the smoothing capacitor 3 in the embodiment shown in Fig. 3. The secondary winding 10b of the choke coil 10 and the diode 11 are connected with the negative output line of the diode bridge rectifier 2. Fig. 21 shows an example of the secondary winding 10b of the choke coil 10 and the diode 11 are connected with the negative output line of the diode bridge rectifier 2 with the primary winding 10a of the choke coil 10 connected in series between the primary winding 4a of the transformer 4 and the MOS-FET 5 in the embodiment shown in Fig. 3. Also, control signals ($V_G$) can be supplied to the gate terminals of the MOS-FET 5 in each of the foregoing embodiments by either the PWM (Pulse Width Modulation) control system with constant frequency, the PFM (Pulse Frequency Modulation) control system with variable frequency, or other control systems. Also, each of the choke coils 10, 23, 24 may be a transformer which has a plurality of windings wound around a magnetic core with air gaps in each of the above-mentioned embodiments. Instead of MOS-FETs, other switching elements may be used such as bipolar transistors, junction FETs (J-FETs), SCRs (reverse blocking three-terminal thyristor) or the like.

As mentioned above, the present invention realizes the improvement in the power factor for AC input by a simple circuit which includes a choke coil with primary and secondary windings without a pre-converter for improving the power factor, thereby resulting in DC converter of small-size, light weight and low cost with its simple electric construction with a small number of components. Also, without a pre-converter for improving the power factor, it is advantageous that there is no mutual interference between a switching element and the pre-converter. Further, it is possible to manufacture a DC converter to be made small in size and light in weight at low cost due to employment of choke coils of small-size, light weight and low cost.

**Claims**

**1.** DC converter including an AC power source (0); a rectifying circuit (2) connected with the AC power source (0); a smoothing capacitor (3) connected with the output terminals of the rectifying circuit (2); a transformer (4) having primary and secondary windings (4a) (4b); and a primary series circuit which contains the primary winding (4a) of the transformer (4) and a switching element (5), and is connected with both ends of the smoothing capacitor (3) to generate DC output from the secondary winding (4b) of the transformer (4) through a rectifier smoothing circuit (6) (7) by ON and OFF operation of the switching element (5), and a choke coil (10) having a primary winding (10a) and a secondary winding (10b);

the primary winding (10a) of the choke coil (10) being connected with the primary series circuit including the primary winding (4a) of the transformer (4) and the switching element (5); and **characterised**

**in that** the secondary winding (10b) of the choke coil (10) being connected between an output of the rectifying circuit (2) and the smoothing capacitor (3).

2. The DC converter as defined in Claim 1, wherein a rectifying element (11) is connected in series with the primary and secondary windings (10a) (10b) of the choke coil (10); and the smoothing capacitor (3) is connected between the rectifying circuit (2) and a junction of the primary winding (10a) of the choke coil (10 and rectifying element (11).

3. The DC converter as defined in Claim 2, wherein another rectifying element (16) is connected between a joint portion of the secondary winding (10b) of the choke coil (10) and the rectifying element (11) and a joint portion of the rectifying circuit (2) and the smoothing capacitor (3).

4. The DC converter as defined in Claim 2, wherein a second rectifying element (17) is connected between a joint portion of the rectifying element (11) and the smoothing capacitor (3) and a joint portion of the rectifying circuit (2) and the secondary winding (10b) of the choke coil (10).

5. The DC converter as defined in Claim 3, wherein a capacitor (34) is connected between a joint portion of the rectifying circuit (2) and the secondary winding (10b) of the choke coil (10) and a joint portion of the rectifying circuit (2) and the second rectifying element (16).

6. The DC converter as defined in Claim 1 or 2, wherein said converter comprises a capacitor (12) connected in series with the primary winding (10a) of the choke coil (10); and
    the primary winding (10a) of the choke coil (10) and the capacitor (12) are connected in parallel with the primary winding (4a) of the transformer (4).

7. The DC converter as defined in Claim 1 or 2, wherein said converter comprises a rectifying element (13) connected in series with the primary winding (10a) of the choke coil (10); and
    said primary winding (10a) of the choke coil (10) and rectifying element (13) are connected in parallel with the primary winding (4a) of the transformer (4).

8. The DC converter as defined in Claim 1, wherein said smoothing capacitor (3) comprises a capacitor series circuit which contains primary and second smoothing capacitors (3a)(3b) connected with the output terminals of the rectifying circuit (2);
    a change means (18) is connected between a joint portion of the first and second smoothing capacitors (3a) (3b) and one end of the AC power source (0);
    the primary winding (4a) of the transformer (4) and the switching element (5) are connected with both ends of the capacitor series circuit;
    the primary winding (10a) of the choke coil (10) is connected in series with the primary winding (4a) of the transformer (4);
    the secondary winding (10b) of the choke coil (10) being connected between one of the output terminals of the rectifying circuit (2) and the first smoothing capacitor (3a), and a tertiary winding (10c) of the choke coil (10) being connected between the other one of the output terminals of the rectifying circuit (2) and the second smoothing capacitor (3b).

9. The DC converter as defined in Claim 8, wherein the primary winding (10a) of the choke coil (10) and a first rectifying element (11a) are connected in series with the secondary winding (10b) of the choke coil (10); and
    a second rectifying element (11b) is connected in series with the tertiary winding (10c) of the choke coil (10).

10. The DC converter as defined in Claim 9, wherein a third rectifying element (16a) is connected between a joint portion of the secondary winding (10b) of the choke coil (10) and the first rectifying element (11a) and a joint portion of the first and second smoothing capacitors (3a)(3b); and ,
    a fourth rectifying element (16b) is connected between a joint portion of the first and second smoothing capacitors (3a)(3b) and a joint portion of the tertiary winding (10c) of the choke coil (10) and the second rectifying element (11b).

11. The DC converter as defined in Claim 10, wherein a capacitor (34) is connected between a joint portion of the rectifying circuit (2) and the secondary winding (10b) of the choke coil (10) and a joint portion of the rectifying circuit (2) and the tertiary winding (10c) of the choke coil (10).

12. The DC converter as defined in Claim 10, wherein a first capacitor (34a) is connected between the change means (18) and a joint portion of the rectifying circuit (2) and the secondary winding (10b) of the choke coil (10); and

a second capacitor (34b) is connected between the change means (18) and a joint portion of the rectifying circuit (2) and the tertiary winding (10c) of the choke coil (10).

13. The DC converter as defined in Claim 1, wherein said switching element (5) comprises a switching series circuit which contains first and second switching elements (19)(20), and is connected with both ends of the smoothing capacitor (3);

a choke coil (10) comprises first and second choke coils (23)(24) having primary and secondary windings (23a)(23b)(24a)(24b) respectively;

said converter comprises a third capacitor series circuit which contains first and second current resonance capacitors (29)(30), and is connected in parallel with the switching series circuit,

first and second voltage resonance capacitors (31)(32) in parallel connection respectively with the first and second switching elements (19)(20),

a first rectifying element (27) in series connection with the primary winding (23a) of the first choke coil (23) toward a direction to allow current flow in a first direction, and

a second rectifying element (28) in series connection with the primary winding (24a) of the second choke coil (24) toward a direction to allow current flow in a second direction;

the primary winding (4a) of the transformer (4) is connected between a joint portion of the first and second switching elements (19)(20) and a joint portion of the first and second current resonance capacitors (29)(30);

the primary winding (4a) of said transformer (4) is connected in series with a first choke coil series circuit which contains the primary winding (23a) of the first choke coil (23) and the first rectifying element (27);

the first choke coil series circuit is connected in parallel with a second choke coil series circuit which contains the primary winding (24a) of the second choke coil (24) and the second rectifying element (28);

the secondary winding (23b) of the first choke coil (23) is connected between the rectifying circuit (2) and the smoothing capacitor (3); and

the secondary winding (24b) of the second choke coil (24) is connected in parallel with the secondary winding (23b) of the first choke coil (23).

14. The DC converter as defined in Claim 13, wherein a third rectifying element (25) is connected in series with the secondary winding (23b) of the first choke coil (23); and

a fourth rectifying element (26) is connected in series with the secondary winding (24b) of the second choke coil (24).

15. The DC converter as defined in Claim 1 to 3, wherein said switching element (5) comprises first and second switching elements (19)(20) connected with both ends of the smoothing capacitor (3);

said converter further comprises a current resonance capacitor (33), each of the first and second switching elements (19)(20) being connected in series with the current resonance capacitor (33) and the primary winding (4a) of the transformer (4);

the primary winding (10a) of the choke coil (10) is connected in series in a switching series circuit of the first and second switching elements (19)(20).

16. The DC converter as defined in Claim 15, wherein first and second voltage resonance capacitors (31)(32) are respectively connected in parallel with the first and second switching elements (19)(20).

17. The DC converter as defined in Claim 1, wherein said smoothing capacitor (3) comprises a first capacitor series circuit which contains first and second smoothing capacitors (3a)(3b), and is connected with the output terminals of the rectifying circuit (2);

a change means (18) is connected between a joint portion of the first and second smoothing capacitors (3a)(3b) and one end of the AC power source (0);

said switching element (5) comprises first and second switching elements (19)(20) connected with both ends of the first capacitor series circuit;

a current resonance capacitor (33) and the primary winding (4a) of the transformer (4) are connected in series with each of the first and second switching elements (19)(20);

said choke coil (10) comprises a tertiary winding (10c);

the primary winding (10a) of the choke coil (10) is connected in series in a switching series circuit of the first and second switching elements (19)(20);

the secondary winding (10b) of the choke coil (10) is connected between one of the output terminals of the rectifying circuit (2) and the first smoothing capacitor (3a); and

the tertiary winding (10c) of the choke coil (10) is connected between the other one of the output terminals of the rectifying circuit (2) and the second smoothing capacitor (3b).

18. The DC converter as defined in Claim 17, wherein first and second voltage resonance capacitors (31)(32) are respectively connected in parallel with the first and second switching elements (19)(20).

19. The DC converter as defined in Claim 17 or 18, wherein a first rectifying element (11a) is connected in series with the secondary winding (10b) of the choke coil (10); and
a second rectifying element (11b) is connected in series with the tertiary winding (10c) of the choke coil (10).

20. The DC converter as defined in Claim 19, wherein a third rectifying element (16a) is connected between a joint portion of the secondary winding (10b) of the choke coil (10) and the first rectifying element (11a) and a joint portion of the first and second smoothing capacitors (3a)(3b); and
a fourth rectifying element (16b) is connected between a joint portion of the first and second smoothing capacitors (3a)(3b) and a joint portion of the tertiary winding (10c) of the choke coil (10) and the second rectifying element (11b).

**Patentansprüche**

1. Gleichstromwandler mit einer Wechselstromquelle (0); einer mit der Wechselstromquelle (0) verbundenen Gleichrichtschaltung (2); einem mit den Ausgangsanschlüssen der Gleichrichtschaltung (2) verbundenen Glättungskondensator (3); einem Transformator (4) mit einer Primär- und einer Sekundärwicklung (4a) (4b); und einer Primärreihenschaltung, die die Primärwicklung (4a) des Transformators (4) und ein Schaltelement (5) enthält und mit beiden Enden des Glättungskondensators (3) verbunden ist, um durch ON- und OFF-Betrieb des Schaltelements (5) Ausgangsgleichstrom aus der Sekundärwicklung (4b) des Transformators (4) zu erzeugen, und einer Drosselspule (10) mit einer Primärwicklung (10a) und einer Sekundärwicklung (10b);
wobei die Primärwicklung (10a) der Drosselspule (10) mit der Primärreihenschaltung, die die Primärwicklung (4a) des Transformators (4) und das Schaltelement (5) enthält, verbunden ist; und
**dadurch gekennzeichnet, daß**
die Sekundärwicklung (10b) der Drosselspule (10) zwischen einen Ausgang der Gleichrichtschaltung (2) und den Glättungskondensator (3) geschaltet ist.

2. Gleichstromwandler nach Anspruch 1, wobei ein Gleichrichtelement (11) mit der Primär- und der Sekundärwicklung (10a) (10b) der Drosselspule (10) in Reihe geschaltet ist; und der Glättungskondensator (3) zwischen die Gleichrichtschaltung (2) und einen Knotenpunkt der Primärwicklung (10a) der Drosselspule (10) und des Gleichrichtelements (11) geschaltet ist.

3. Gleichstromwandler nach Anspruch 2, wobei ein weiteres Gleichrichtelement (16) zwischen einen gemeinsamen Teil der Sekundärwicklung (10b) der Drosselspule (10) und des Gleichrichtelements (11) und einen gemeinsamen Teil der Gleichrichtschaltung (2) und des Glättungskondensators (3) geschaltet ist.

4. Gleichstromwandler nach Anspruch 2, wobei ein zweites Gleichrichtelement (17) zwischen einen gemeinsamen Teil des Gleichrichtelements (11) und des Glättungskondensators (3) einen gemeinsamen Teil der Gleichrichtschaltung (2) und der Sekundärwicklung (10b) der Drosselspule (10) geschaltet ist.

5. Gleichstromwandler nach Anspruch 3, wobei ein Kondensator (34) zwischen einen gemeinsamen Teil der Gleichrichtschaltung (2) und der Sekundärwicklung (10b) der Drosselspule (10) und einen gemeinsamen Teil der Gleichrichtschaltung (2) und des zweiten Gleichrichtelements (16) geschaltet ist.

6. Gleichstromwandler nach Anspruch 1 oder 2, wobei der Wandler einen Kondensator (12) umfaßt, der mit der Primärwicklung (10a) der Drosselspule (10) in Reihe geschaltet ist; und
die Primärwicklung (10a) der Drosselspule (10) und der Kondensator (12) mit der Primärwicklung (4a) des Transformators (4) parallelgeschaltet sind.

7. Gleichstromwandler nach Anspruch 1 oder 2, wobei der Wandler ein Gleichrichtelement (13) umfaßt, das mit der Primärwicklung (10a) der Drosselspule (10) in Reihe geschaltet ist; und
die Primärwicklung (10a) der Drosselspule (10) und das Gleichrichtelement (13) mit der Primärwicklung (4a) des Transformators (4) parallelgeschaltet sind.

8. Gleichstromwandler nach Anspruch 1, wobei der Glättungskondensator (3) eine Kondensatorreihenschaltung umfaßt, die einen ersten und einen zweiten Glättungskondensator (3a)(3b) enthält, die mit den Ausgangsanschlüssen der Gleichrichtschaltung (2) verbunden sind;
ein Änderungsmittel (18) zwischen einen gemeinsamen Teil des ersten und des zweiten Glättungskondensators (3a)(3b) und ein Ende der Wechselstromquelle (0) geschaltet ist;
die Primärwicklung (4a) des Transformators (4) und das Schaltelement (5) mit beiden Enden der Kondensatorreihenschaltung verbunden sind;
die Primärwicklung (10a) der Drosselspule (10) mit der Primärwicklung (4a) des Transformators (4) in Reihe geschaltet ist;
die Sekundärwicklung (10b) der Drosselspule (10) zwischen einen der Ausgangsanschlüsse der Gleichrichtschaltung (2) und den ersten Glättungskondensator (3a) geschaltet ist und eine Tertiärwicklung (10c) der Drosselspule (10) zwischen den anderen der Ausgangsanschlüsse der Gleichrichtschaltung (2) und den zweiten Glättungskondensator (3b) geschaltet ist.

9. Gleichstromwandler nach Anspruch 8, wobei die Primärwicklung (10a) der Drosselspule (10) und ein erstes Gleichrichtelement (11a) mit der Sekundärwicklung (10b) der Drosselspule (10) in Reihe geschaltet sind; und
ein zweites Gleichrichtelement (11b) mit der Tertiärwicklung (10c) der Drosselspule (10) in Reihe geschaltet ist.

10. Gleichstromwandler nach Anspruch 9, wobei ein drittes Gleichrichtelement (16a) zwischen einen gemeinsamen Teil der Sekundärwicklung (10b) der Drosselspule (10) und des ersten Gleichrichtelements (11a) und einen gemeinsamen Teil des ersten und des zweiten Glättungskondensators (3a)(3b) geschaltet ist; und
ein viertes Gleichrichtelement (16b) zwischen einen gemeinsamen Teil des ersten und des zweiten Glättungskondensators (3a)(3b) und einen gemeinsamen Teil der Tertiärwicklung (10c) der Drosselspule (10) und des zweiten Gleichrichtelements (11b) geschaltet ist.

11. Gleichstromwandler nach Anspruch 10, wobei ein Kondensator (34) zwischen einen gemeinsamen Teil der Gleichrichtschaltung (2) und der Sekundärwicklung (10b) der Drosselspule (10) und einen gemeinsamen Teil der Gleichrichtschaltung (2) und der Tertiärwicklung (10c) der Drosselspule (10) geschaltet ist.

12. Gleichstromwandler nach Anspruch 10, wobei ein erster Kondensator (34a) zwischen das Änderungsmittel (18) und einen gemeinsamen Teil der Gleichrichtschaltung (2) und der Sekundärwicklung (10b) der Drosselspule (10) geschaltet ist; und
ein zweiter Kondensator (34b) zwischen das Änderungsmittel (18) und einen gemeinsamen Teil der Gleichrichtschaltung (2) und der Tertiärwicklung (10c) der Drosselspule (10) geschaltet ist.

13. Gleichstromwandler nach Anspruch 1, wobei das Schaltelement (5) eine Schalt-Reihenschaltung umfaßt, die ein erstes und ein zweites Schaltelement (19)(20) enthält und mit beiden Enden des Glättungskondensators (3) verbunden ist;
eine Drosselspule (10) eine erste und eine zweite Drosselspule (23)(24) jeweils mit einer Primär- und einer Sekundärwicklung (23a)(23b)(24a)(24b) umfaßt;
der Wandler eine dritte Kondensatorreihenschaltung umfaßt, die einen ersten und einen zweiten Stromresonanzkondensator (29) (30) enthält und mit der Schalt-Reihenschaltung parallelgeschaltet ist,
ein erster und ein zweiter Spannungsresonanzkondensator (31)(32) jeweils mit dem ersten und dem zweiten Schaltelement (19)(20) parallelgeschaltet sind,
ein erstes Gleichrichtelement (27) in einer solchen Richtung mit der Primärwicklung (23a) der ersten Drosselspule (23) in Reihe geschaltet ist, daß ein Stromfluß in einer ersten Richtung gestattet wird, und
ein zweites Gleichrichtelement (28) in einer solchen Richtung mit der Primärwicklung (24a) der zweiten Drosselspule (24) in Reihe geschaltet ist, daß ein Stromfluß in einer zweiten Richtung gestattet wird;
die Primärwicklung (4a) des Transformators (4) zwischen einen gemeinsamen Teil des ersten und des zweiten Schaltelements (19) (20) und einen gemeinsamen Teil des ersten und des zweiten Stromresonanzkondensators (29)(30) geschaltet ist;
die Primärwicklung (4a) des Transformators (4) mit einer ersten Drosselspulenreihenschaltung in Reihe geschaltet ist, die die Primärwicklung (23a) der ersten Drosselspule (23) und das erste Gleichrichtelement (27) enthält;
die erste Drosselspulenreihenschaltung mit einer zweiten Drosselspulenreihenschaltung in Reihe geschaltet ist, die die Primärwicklung (24a) der zweiten Drosselspule (24) und das zweite Gleichrichtelement (28) enthält;
die Sekundärwicklung (23b) der ersten Drosselspule (23) zwischen die Gleichrichtschaltung (2) und den Glättungskondensator (3) geschaltet ist; und

die Sekundärwicklung (24b) der zweiten Drosselspule (24) mit der Sekundärwicklung (23b) der ersten Drosselspule (23) parallelgeschaltet ist.

14. Gleichstromwandler nach Anspruch 13, wobei ein drittes Gleichrichtelement (25) mit der Sekundärwicklung (23b) der ersten Drosselspule (23) in Reihe geschaltet ist; und

ein viertes Gleichrichtelement (26) mit der Sekundärwicklung (24b) der zweiten Drosselspule (24) in Reihe geschaltet ist.

15. Gleichstromwandler nach Anspruch 1 bis 3, wobei das Schaltelement (5) ein erstes und ein zweites Schaltelement (19)(20) umfaßt, die mit beiden Enden des Glättungskondensators (3) verbunden sind;

der Wandler weiterhin einen Stromresonanzkondensator (33) umfaßt, wobei das erste und das zweite Schaltelement (19) (20) mit dem Stromresonanzkondensator (33) und der Primärwicklung (4a) des Transformators (4) in Reihe geschaltet sind;

die Primärwicklung (10a) der Drosselspule (10) mit einer Schalt-Reihenschaltung des ersten und des zweiten Schaltelements (19) (20) in Reihe geschaltet ist.

16. Gleichstromwandler nach Anspruch 15, wobei ein erster und ein zweiter Spannungsresonanzkondensator (31) (32) jeweils mit dem ersten und dem zweiten Schaltelement (19) (20) parallelgeschaltet sind.

17. Gleichstromwandler nach Anspruch 1, wobei der Glättungskondensator (3) eine erste Kondensatorreihenschaltung umfaßt, die einen ersten und einen zweiten Glättungskondensator (3a)(3b) enthält und mit den Ausgangsanschlüssen der Gleichrichtschaltung (2) verbunden ist;

ein Änderungsmittel (18) zwischen einen gemeinsamen Teil des ersten und des zweiten Glättungskondensators (3a)(3b) und ein Ende der Wechselstromquelle (0) geschaltet ist;

das Schaltelement (5) ein erstes und ein zweites Schaltelement (19)(20) umfaßt, die mit beiden Enden der ersten Kondensatorreihenschaltung verbunden sind;

ein Stromresonanzkondensator (33) und die Primärwicklung (4a) des Transformators (4) jeweils mit dem ersten und dem zweiten Schaltelement (19)(20) in Reihe geschaltet ist;

die Drosselspule (10) eine Tertiärwicklung (10c) umfaßt;

die Primärwicklung (10a) der Drosselspule (10) in einer Schalt-Reihenschaltung des ersten und des zweiten Schaltelements (19) (20) in Reihe geschaltet ist;

die Sekundärwicklung (10b) der Drosselspule (10) zwischen einen der Ausgangsanschlüsse der Gleichrichtschaltung (2) und den ersten Glättungskondensator (3a) geschaltet ist; und

die Tertiärwicklung (10c) der Drosselspule (10) zwischen den anderen der Ausgangsanschlüsse der Gleichrichtschaltung (2) und den zweiten Glättungskondensator (3b) geschaltet ist.

18. Gleichstromwandler nach Anspruch 17, wobei ein erster und ein zweiter Spannungsresonanzkondensator (31) (32) jeweils mit dem ersten und dem zweiten Schaltelement (19) (20) parallelgeschaltet sind.

19. Gleichstromwandler nach Anspruch 17 oder 18, wobei ein erstes Gleichrichtelement (11a) mit der Sekundärwicklung (10b) der Drosselspule (10) in Reihe geschaltet sind; und

ein zweites Gleichrichtelement (11b) mit der Tertiärwicklung (10c) der Drosselspule (10) in Reihe geschaltet ist.

20. Gleichstromwandler nach Anspruch 19, wobei ein drittes Gleichrichtelement (16a) zwischen einen gemeinsamen Teil der Sekundärwicklung (10b) der Drosselspule (10) und des ersten Gleichrichtelements (11a) und einen gemeinsamen Teil des ersten und des zweiten Glättungskondensators (3a)(3b) geschaltet ist; und

ein viertes Gleichrichtelement (16b) zwischen einen gemeinsamen Teil des ersten und des zweiten Glättungskondensators (3a)(3b) und einen gemeinsamen Teil der Tertiärwicklung (10c) der Drosselspule (10) und des zweiten Gleichrichtelements (11b) geschaltet ist.

**Revendications**

1. Convertisseur en courant continu comprenant une source d'alimentation en courant alternatif (0) un circuit de redressement (2) connecté à la source d'alimentation en courant alternatif (0) ; un condensateur de filtrage (3) connecté aux bornes de sortie du circuit de redressement (2) ; un transformateur (4) comportant des enroulements primaire et secondaire (4a) (4b) ; et un circuit série primaire qui contient l'enroulement primaire (4a) du transformateur (4) et un élément de commutation (5) et qui est connecté aux deux extrémités du condensateur de filtrage (3) pour générer une sortie en courant continu à partir de l'enroulement secondaire (4b) du transformateur (4) par l'intermédiaire d'un circuit de redressement-filtrage (6) (7) par une opération de marche/arrêt de l'élément de commutation (5), et une bobine d'arrêt (10) comportant un enroulement primaire (10a) et un enroulement secondaire (10b) ;

l'enroulement primaire (10a) de la bobine d'arrêt (10) étant connecté au circuit série primaire comprenant l'enroulement primaire (4a) du transformateur (4) et l'élément de commutation (5) ; et **caractérisé en ce que** l'enroulement secondaire (10b) de la bobine d'arrêt (10) est connecté entre une sortie du circuit de redressement (2) et le condensateur de filtrage (3).

2. Convertisseur en courant continu selon la revendication 1, dans lequel un élément de redressement (11) est connecté en série aux enroulements primaire et secondaire (10a) (10b) de la bobine d'arrêt (10) ; et le condensateur de filtrage (3) est connecté entre le circuit de redressement (2) et une jonction de l'enroulement primaire (10a) de la bobine d'arrêt (10) et de l'élément de redressement (11).

3. Convertisseur en courant continu selon la revendication 2, dans lequel un autre élément de redressement (16) est connecté entre une partie de jonction de l'enroulement secondaire (10b) de la bobine d'arrêt (10) et de l'élément de redressement (11) et une partie de jonction du circuit de redressement (2) et du condensateur de filtrage (3).

4. Convertisseur en courant continu selon la revendication 2, dans lequel un deuxième élément de redressement (17) est connecté entre une partie de jonction de l'élément de redressement (11) et du condensateur de filtrage (3) et une partie de jonction du circuit de redressement (2) et de l'enroulement secondaire (10b) de la bobine d'arrêt (10).

5. Convertisseur en courant continu selon la revendication 3, dans lequel un condensateur (34) est connecté entre une partie de jonction du circuit de redressement (2) et de l'enroulement secondaire (10b) de la bobine d'arrêt (10) et une partie de jonction du circuit de redressement (2) et du deuxième élément de redressement (16).

6. Convertisseur en courant continu selon la revendication 1 ou 2, dans lequel ledit convertisseur comprend un condensateur (12) connecté en série à l'enroulement primaire (10a) de la bobine d'arrêt (10) ; et l'enroulement primaire (10a) de la bobine d'arrêt (10) et le condensateur (12) sont connectés en parallèle à l'enroulement primaire (4a) du transformateur (4).

7. Convertisseur en courant continu selon la revendication 1 ou 2, dans lequel ledit convertisseur comprend un élément de redressement (13) connecté en série à l'enroulement primaire (10a) de la bobine d'arrêt (10) ; et ledit enroulement primaire (10a) de la bobine d'arrêt (10) et l'élément de redressement (13) sont connectés en parallèle à l'enroulement primaire (4a) du transformateur (4).

8. Convertisseur en courant continu selon la revendication 1, dans lequel ledit condensateur de filtrage (3) comprend un circuit série de condensateurs qui contient des condensateurs de filtrage primaire et secondaire (3a) (3b) connectés aux bornes de sortie du circuit de redressement (2) ; des moyens de changement (18) sont connectés entre une partie de jonction des premier et deuxième condensateurs de filtrage (3a) (3b) et une extrémité de la source d'alimentation en courant alternatif (0) ;

l'enroulement primaire (4a) du transformateur (4) et l'élément de commutation (5) sont connectés aux deux extrémités du circuit série de condensateurs ;

l'enroulement primaire (10a) de la bobine d'arrêt (10) est connecté en série à l'enroulement primaire (4a) du transformateur (4) ;

l'enroulement secondaire (10b) de la bobine d'arrêt (10) étant connecté entre l'une des bornes de sortie du circuit de redressement (2) et le premier condensateur de filtrage (3a) et un enroulement tertiaire (10c) de la bobine d'arrêt (10) étant connecté entre l'autre des bornes de sortie du circuit de redressement (2) et le deuxième condensateur de filtrage (3b).

9. Convertisseur en courant continu selon la revendication 8, dans lequel l'enroulement primaire (10a) de la bobine d'arrêt (10) et un premier élément de redressement (11a) sont connectés en série à l'enroulement secondaire (10b) de la bobine d'arrêt (10) ; et

un deuxième élément de redressement (11b) est connecté en série à l'enroulement tertiaire (10c) de la bobine d'arrêt (10).

**10.** Convertisseur en courant continu selon la revendication 9, dans lequel un troisième élément de redressement (16a) est connecté entre une partie de jonction de l'enroulement secondaire (10b) de la bobine d'arrêt (10) et du premier élément de redressement (11a) et une partie de jonction des premier et deuxième condensateurs de filtrage (3a) (3b) ; et

un quatrième élément de redressement (16b) est connecté entre une partie de jonction des premier et deuxième condensateurs de filtrage (3a) (3b) et une partie de jonction de l'enroulement tertiaire (10c) de la bobine d'arrêt (10) et du deuxième élément de redressement (11b).

**11.** Convertisseur en courant continu selon la revendication 10, dans lequel un condensateur (34) est connecté entre une partie de jonction du circuit de redressement (2) et de l'enroulement secondaire (10b) de la bobine d'arrêt (10) et une partie de jonction du circuit de redressement (2) et de l'enroulement tertiaire (10c) de la bobine d'arrêt (10).

**12.** Convertisseur en courant continu selon la revendication 10, dans lequel un premier condensateur (34a) est connecté entre les moyens de changement (18) et une partie de jonction du circuit de redressement (2) et de l'enroulement secondaire (10b) de la bobine d'arrêt (10) ; et

un deuxième condensateur (34b) est connecté entre les moyens de changement (18) et une partie de jonction du circuit de redressement (2) et de l'enroulement tertiaire (10c) de la bobine d'arrêt (10).

**13.** Convertisseur en courant continu selon la revendication 1, dans lequel ledit élément de commutation (5) comprend un circuit série de commutation qui contient des premier et deuxième éléments de commutation (19) (20), et est connecté aux deux extrémités du condensateur de filtrage (3) ;

une bobine d'arrêt (10) comprend des première et deuxième bobines d'arrêt (23) (24) comportant des enroulements primaire et secondaire (23a) (23b) (24a) (24b), respectivement ;

ledit convertisseur comprend un troisième circuit série de condensateurs qui contient des premier et deuxième condensateurs de résonance de courant (29) (30) et est connecté en parallèle au circuit série de commutation ;

des premier et deuxième condensateurs de résonance de tension (31) (32) respectivement en connexion parallèle avec des premier et deuxième éléments de commutation (19) (20) ;

un premier élément de redressement (27) connecté en série à l'enroulement primaire (23a) de la première bobine d'arrêt (23) dans une direction permettant une circulation de courant dans une première direction ; et

un deuxième élément de redressement (28) connecté en série à l'enroulement primaire (24a) de la deuxième bobine d'arrêt (24) dans une direction permettant une circulation de courant dans une deuxième direction ;

l'enroulement primaire (4a) du transformateur (4) est connecté entre une partie de jonction des premier et deuxième éléments de commutation (19) (20) et une partie de jonction des premier et deuxième condensateurs de résonance de courant (29) (30) ;

l'enroulement primaire (4a) dudit transformateur (4) est connecté en série à un premier circuit série de bobine d'arrêt qui contient l'enroulement primaire (23a) de la première bobine d'arrêt (23) et le premier élément de redressement (27) ;

le premier circuit série de bobine d'arrêt est connecté en parallèle à un deuxième circuit série de bobine d'arrêt qui contient l'enroulement primaire (24a) de la deuxième bobine d'arrêt (24) et le deuxième élément de redressement (28) ;

l'enroulement secondaire (23b) de la première bobine d'arrêt (23) est connecté entre le circuit de redressement (2) et le condensateur de filtrage (3) ; et

l'enroulement secondaire (24b) de la deuxième bobine d'arrêt (24) est connecté en parallèle à l'enroulement secondaire (23b) de la première bobine d'arrêt (23).

**14.** Convertisseur en courant continu selon la revendication 13, dans lequel un troisième élément de redressement (25) est connecté en série à l'enroulement secondaire (23b) de la première bobine d'arrêt (23) ; et

un quatrième élément de redressement (26) est connecté en série à l'enroulement secondaire (24b) de la deuxième bobine d'arrêt (24).

**15.** Convertisseur en courant continu selon les revendications 1 à 3, dans lequel ledit élément de commutation (5) comprend des premier et deuxième éléments de commutation (19) (20) connectés aux deux extrémités du condensateur de filtrage (3) ;

ledit convertisseur comprend, en outre, un condensateur de résonance de courant (33), chacun des premier et deuxième éléments de commutation (19) (20) étant connecté en série au condensateur de résonance de courant (33) et à l'enroulement primaire (4a) du transformateur (4) ;

l'enroulement primaire (10a) de la bobine d'arrêt (10) est connecté en série dans un circuit série de commutation des premier et deuxième éléments de commutation (19) (20).

**16.** Convertisseur en courant continu selon la revendication 15, dans lequel des premier et deuxième condensateurs de résonance de tension (31) (32) sont respectivement connectés en parallèle aux premier et deuxième éléments de commutation (19) (20).

**17.** Convertisseur en courant continu selon la revendication 1, dans lequel ledit condensateur de filtrage (3) comprend un premier circuit série de condensateurs qui contient des premier et deuxième condensateurs de filtrage (3a) (3b) et est connecté aux bornes de sortie du circuit de redressement (2) ;
des moyens de changement (18) sont connectés entre une partie de jonction des premier et deuxième condensateurs de filtrage (3a) (3b) et une extrémité de la source d'alimentation en courant alternatif (0) ;
ledit élément de commutation (5) comprend des premier et deuxième éléments de commutation (19) (20) connectés aux deux extrémités du premier circuit série de condensateurs ;
un condensateur de résonance de courant (33) et l'enroulement primaire (4a) du transformateur (4) sont connectés en série à chacun des premier et deuxième éléments de commutation (19) (20) ;
ladite bobine d'arrêt (10) comprend un enroulement tertiaire (10c) ;
l'enroulement primaire (10a) de la bobine d'arrêt (10) est connecté en série dans un circuit série de commutation des premier et deuxième éléments de commutation (19) (20) ;
l'enroulement secondaire (10b) de la bobine d'arrêt (10) est connecté entre l'une des bornes de sortie du circuit de redressement (2) et le premier condensateur de filtrage (3a) ; et
l'enroulement tertiaire (10c) de la bobine d'arrêt (10) est connecté entre l'autre des bornes de sortie du circuit de redressement (2) et le deuxième condensateur de filtrage (3b).

**18.** Convertisseur en courant continu selon la revendication 17, dans lequel des premier et deuxième condensateurs de résonance de tension (31) (32) sont respectivement connectés en parallèle aux premier et deuxième éléments de commutation (19) (20).

**19.** Convertisseur en courant continu selon la revendication 17 ou 18, dans lequel un premier élément de redressement (11a) est connecté en série à l'enroulement secondaire (10b) de la bobine d'arrêt (10) ; et
un deuxième élément de redressement (11b) est connecté en série à l'enroulement tertiaire (10c) de la bobine d'arrêt (10).

**20.** Convertisseur en courant continu selon la revendication 19, dans lequel un troisième élément de redressement (16a) est connecté entre une partie de jonction de l'enroulement secondaire (10b) de la bobine d'arrêt (10) et du premier élément de redressement (11a) et une partie de jonction des premier et deuxième condensateurs de filtrage (3a) (3b) ; et
un quatrième élément de redressement (16b) est connecté entre une partie de jonction des premier et deuxième condensateurs de filtrage (3a) (3b) et une partie de jonction de l'enroulement tertiaire (10c) de la bobine d'arrêt (10) et du deuxième élément de redressement (11b).

EP 0 725 475 B1

F I G. 1

F I G. 2

FIG. 3

FIG. 4

# F I G. 5

# F I G. 6

# F I G. 7

FIG. 8

FIG. 9

F I G. 1 0

F I G. 1 1

# FIG. 12

# FIG. 13

F I G. 1 4

F I G. 1 5

# FIG. 16

(A) $V_{IN}$

(B) $I_{IN}$

# FIG. 17

EP 0 725 475 B1

# FIG. 18

# FIG. 19

# F I G. 2 0

# F I G. 2 1

# FIG. 22

# FIG. 23

(A)$V_{IN}$

(B)$I_{IN}$